# EUROPÄISCHE PATENTSCHRIFT

(11) **EP 3 814 688 B1**
(45) Veröffentlichungstag und Bekanntmachung des Hinweises auf die Patenterteilung: **13.03.2024**
(21) Anmeldenummer: 18739756.7
(22) Anmeldetag: 26.06.2018
(51) Int. Cl.: F24D 17/00, F24D 19/10, E03B 7/04

(54) **VERFAHREN ZUM BETREIBEN EINES WASSER-ZIRKULATIONSSYSTEMS**
METHOD FOR OPERATING A WATER CIRCULATION SYSTEM
PROCÉDÉ POUR FAIRE FONCTIONNER UN SYSTÈME DE CIRCULATION D'EAU

(43) Veröffentlichungstag der Anmeldung: 05.05.2021
(73) Patentinhaber: Viega Technology GmbH & Co. KG, 57439 Attendorn (DE)
(72) Erfinder: OBRIST, Roland, 7412 Scharans (CH); KNUPFER, Thomas, 7000 Chur (CH); KNUPFER, Daniel, 7203 Trimmis (CH)
(74) Vertreter: Troesch Scheidegger Werner AG
(86) Internationale Anmeldenummer: PCT/EP2018/067084
(87) Internationale Veröffentlichungsnummer: WO 2020/001746

(56) Entgegenhaltungen:
- EP-A1- 2 942 571
- DE-A1- 19 818 630
- DE-A1-102016 106 817
- DE-B3-102006 054 729
- FR-A1- 2 936 042

## Beschreibung

### TECHNISCHES GEBIET

Die vorliegende Erfindung betrifft ein Verfahren zum Betreiben eines Wasser-Zirkulationssystems, insbesondere eines leitungsgebundenen Trink- oder Brauchwassersystems.

### STAND DER TECHNIK

Aus dem Stand der Technik sind Betriebsverfahren für Wasser-Zirkulationssysteme bekannt, bei welchen die Wassertemperatur über oder unter einer vorbestimmten Temperatur gehalten werden müssen, um das Wachstum von Keimen nicht zu begünstigen. Solche Systeme sind in den Dokumenten DE 10 2016 106817 A1 oder FR 2 936 042 A1 offenbart.

Das Wachstum von Keimen, wie Pseudomonas aeruginosa oder Legionellen, wird in einem Temperaturbereich von 20 bis 50°C besonders begünstigt. Aus Hygienegründen, d.h. um das Keimwachstum möglichst zu verhindern, sollte demnach die Wassertemperatur nicht in diesem Bereich gehalten werden. Aus Komfortgründen, d.h. um rasch eine genügend hohe Mischtemperatur erreichen zu können, wird die Warmwassertemperatur üblicherweise auf 55°C gehalten. Da die Warmwasserleitungen nicht perfekt isolierbar sind, wird dauernd Wärme von den Leitungen an die kühlere Umgebung abgegeben; in der Regel 8 bis 10 Watt pro Meter. Je grösser die Temperaturdifferenz zwischen dem Warmwasser und der Umgebung ist, desto grösser ist der Wärmeverlust der Leitungen. Um die Wärmeverluste zu reduzieren und um somit Energie zu sparen, kann eine sogenannte Nachtabsenkung der Warmwassertemperatur zugelassen werden. Beispielsweise kann die Temperatur während einem Zeitraum von 8 Stunden um 10°C abgesenkt werden. Die diesbezüglichen regulatorischen Bestimmungen können von Land zu Land unterschiedlich sein. Wie es der Name schon sagt, erfolgt die Temperaturabsenkung vorzugsweise in der Nacht, wenn weniger oder gar kein Warmwasser verbraucht wird. Die Erfahrung hat jedoch gezeigt, dass die Nachtabschaltung nur selten oder gar nicht vorgenommen wird, sei es aus Angst vor den Keimen oder aus Bequemlichkeit, um nicht lange auf warmes Wasser warten zu müssen. Dementsprechend wird bei den meisten Warmwasser-Zirkulationssystemen das Potential der Energieeinsparung nicht ausgenutzt.

Das oben beschriebene ist auch auf ein Zirkulationssystem mit Kaltwasser anwendbar. Dementsprechend sollte das Kaltwasser unter 20°C gehalten werden. Da die Kaltwasserleitungen ebenfalls nicht perfekt isolierbar sind, nehmen die Leitungen dauernd Wärme von der wärmeren Umgebung auf. Je grösser die Temperaturdifferenz zwischen dem Kaltwasser und der Umgebung ist, desto grösser ist die Wärmeaufnahme der Leitungen. Um in einem Kaltwassersystem die Wassertemperatur permanent unter 20°C zu halten, muss dauernd gekühlt und folglich wird keine Energie eingespart.

### BESCHREIBUNG DER ERFINDUNG

Eine Aufgabe der vorliegenden Erfindung besteht darin, ein Verfahren zum Betreiben eines Trink- oder Brauchwassersystems bereitzustellen, welches energiesparsamer ist.

Diese Aufgabe wird durch ein Verfahren mit den Merkmalen des Anspruchs 1 gelöst. Weitere Ausführungsformen des Verfahrens sind durch die Merkmale von weiteren Ansprüchen definiert.

Durch das Absenken der Wassertemperatur im System verringert sich die Temperaturdifferenz des Wassers zur Umgebung, wodurch der Wärmeverlust des Wassers an die Umgebung verringert wird. Ein solches Verfahren erlaubt die Einsparung von Energie und Wasser, ohne dabei den Komfort zu reduzieren, bei der gleichzeitigen Einhaltung der strengen Hygieneansprüche.

Beispielsweise kann die erste Temperatur für ein Warmwasser-Zirkulationssystem in einem Bereich von 50 bis 60°C festgelegt werden. In einem Kaltwasser-Zirkulationssystem kann die erste Temperatur in einem Bereich von 10 bis 20°C festgelegt werden. Um dies erreichen zu können, muss die Temperier-Einheit, d.h. ein Boiler, bzw. eine Kühlanlage mit dem Ventil derart abgestimmt sein, dass die festgelegte Temperatur erreicht werden kann. Je grösser der Durchfluss am Ventil, desto schneller kann das Wasser vom Boiler zum Verbraucher gelangen. Der zur Erreichung der ersten Temperatur benötigte Durchfluss beim Ventil, kann in der Systemsteuerung abrufbar gespeichert werden. Üblicherweise können mit solchen Ventilen Durchflussraten von bis zu 1 Liter pro Minute, 10 Litern pro Minute, bis zu 30 Litern pro Minute eingestellt werden.

Die zweite Temperatur kann direkt festgelegt werden oder sie kann aus der ersten Temperatur und einer Temperaturdifferenz berechnet werden. Beispielsweise kann die Temperaturdifferenz in einem Bereich von 1 bis 15°C festgelegt werden. Die Absenkdauer kann beispielsweise in einem Bereich von 1 bis 12 Stunden festgelegt werden. Die Absenkdauer und die Temperaturdifferenz können gesetzlich vorgeschrieben sein. Beispielsweise kann die Temperaturdifferenz 10°C während einer Absenkdauer von 8 Stunden betragen. Sobald die Wassertemperatur abgesenkt wird, d.h. die zweite Temperatur eingestellt ist, läuft die Zeit der Absenkdauer. Es spielt keine Rolle, ob die erste Temperatur nur leicht unterschritten wird oder ob die Temperatur der zweiten Temperatur entspricht.

In einer Ausführungsform umfasst das Verfahren die Schritte:
- Festlegen eines Zeitfensters;
- Festlegen eines Schwellenwertes;
- Berechnen der absoluten Differenz zwischen der erfassten Wassertemperatur und der ersten Temperatur;
- Integrieren der Differenz während dem Zeitfenster;
- Einstellen der zweiten Temperatur, wenn das Integral kleiner oder gleich dem Schwellenwert ist;
- Erfassen der Zeit, während welcher die zweite Temperatur eingestellt ist;
- Einstellen der ersten Temperatur, wenn das Integral grösser als der Schwellenwert ist oder wenn die Gesamtzeit, während welcher die zweite Temperatur eingestellt ist, grösser als die Absenkdauer ist.

Durch das Integral der absoluten Differenz zwischen der erfassten Wassertemperatur und der ersten Temperatur, ist das Verfahren für Warmwasser-, sowie für Kaltwasser-Systeme verwendbar. Das Zeitfenster bewegt sich zusammen mit der fortlaufenden Zeit. D.h. wenn zu einem Zeitpunkt festgestellt wird, dass rückwärts betrachtet innerhalb der Dauer des Zeitfensters der Verbrauch unterhalb dem Schwellenwert lag, dann kann die Wassertemperatur im Strang ab diesem Zeitpunkt abgesenkt werden oder abgesenkt bleiben, wenn sie schon abgesenkt ist. Alternativ kann die erste Temperatur eingestellt werden, wenn die erfasste Wassertemperatur bei einem Warmwasser-System unter einem zulässigen Wert ist, bzw. bei einem Kaltwasser-System über einem zulässigen Wert. D.h. wenn eine zulässige minimale Temperaturdifferenz überschritten wird. Dies gilt für Warmwasser-, sowie für Kaltwasser-Systeme.

Die gesetzlichen Werte der zulässigen Temperaturdifferenz und der Absenkdauer können voreingestellt sein und ein Benutzer kann eine individuelle Anpassung der Werte nur innerhalb der gesetzlich zulässigen Bereiche vornehmen.

Das Zeitfenster kann beliebig festgelegt werden. Beispielsweise kann festgelegt werden, dass wenn innerhalb von 30 Minuten kein Wasser verbraucht wurde, eine Temperaturabsenkung für Warmwasser-Systeme, respektive eine Temperaturzunahme für Kaltwasser-Systeme vorgenommen werden kann. Zeitfenster von 5 Minuten, 10 Minuten, 15 Minuten, 30 Minuten, 45 Minuten, einer Stunde oder länger können festgelegt werden.

Ein Verbrauch kann mittels des erfassten Temperaturverlaufes ermittelt werden. Bei einem Warmwasser-System nimmt die gemessene Temperatur bei einer Nutzung in der Regel ab und bei einem Kaltwasser-System nimmt sie in der Regel zu.

In einer Ausführungsform umfasst das Verfahren die Schritte:
- Festlegen eines Zeitraumes, wobei die zweite Temperatur nur dann eingestellt wird, wenn die aktuelle Zeit innerhalb des Zeitraumes liegt.

Der Zeitraum kann durch eine Start- und eine Endzeit oder durch eine Startzeit und eine Dauer festgelegt werden. Üblicherweise der Wasserverbrauch am Morgen, am Mittag und am Abend am grössten. Dementsprechend können mehrere Zeiträume am Tag zwischen den Hauptverbrauchszeiten festgelegt werden. Beispielsweise von Mitternacht bis 6 Uhr früh, von 9 Uhr bis 11 Uhr, von 14 Uhr bis 18 Uhr und von 22 Uhr bis Mitternacht.

In einer Ausführungsform ist das Zeitfenster in den Randbereichen des Zeitraumes grösser als in seinem Mittelbereich.

Üblicherweise sind in den Randbereichen des Zeitraumes eher Aktivitäten zu erwarten, als im Mittelbereich. Beispielsweise kann der Zeitraum von zehn Uhr nachts bis sechs Uhr morgens festgelegt werden. Es ist zu erwarten, dass zwischen zehn Uhr abends und Mitternacht und zwischen fünf und sechs Uhr morgens mehr Aktivität herrscht, d.h. mehr Verbrauch zu erwarten ist, als zwischen Mitternacht und fünf Uhr morgens. Beispielsweise können die Zeitfenster zwischen zehn Uhr abends bis Mitternacht 15 Minuten betragen und zwischen Mitternacht und fünf Uhr morgens 30 Minuten. Der Zeitraum kann zu einer beliebigen Zeit am Tag festgelegt werden und die Zeitfenster können beliebig abgestuft sein.

In einer Ausführungsform sind mehrere Zeiträume über einen Tag verteilt vorgesehen, wobei die zweite Temperatur aller Zeiträume gleich ist, teilweise unterschiedlich oder unterschiedlich ist. Beispielsweise kann in einem Zeitraum, in welchem ein reduzierter Verbrauch zu erwarten ist, eine zweite Temperatur vorgegeben sein, welche nur gering kleiner ist als die erste Temperatur und es kann in einem Zeitraum, in welchem fast kein Verbrauch zu erwarten ist, eine zweite Temperatur vorgegeben sein, welche noch geringer als die erste Temperatur ist. Beispielsweise kann die zweite Temperatur um 1°C, 2°C, 3°C, 5°C oder 10°C tiefer sein als die erste Temperatur. Die zweite Temperatur kann höher eingestellt sein als die gesetzlich zulässige Absenktemperatur, beispielsweise aus Gründen des Komforts.

In einer Ausführungsform umfasst das Verfahren die Schritte:
- Aufzeichnen eines Temperaturverlaufs der erfassten Wassertemperaturen;
- Zuordnen eines spezifischen Verbrauchs zum aufgezeichneten Temperaturverlauf während einem Zeit-Intervall.

Beispielsweise entspricht eine geringe Temperaturdifferenz in einem kleinen Zeit-Intervall einem Händewaschen, eine grössere Temperaturdifferenz über einen grösseren Zeitraum einem Duschen und eine grosse Temperaturdifferenz während einer langen Zeit dem Einlassen eines Bades. Unterschiedliche Nutzungen lassen sich anhand ihres unterschiedlichen Temperaturverlaufes über die Zeit identifizieren. Die Spezifikation kann werkseitig oder vor Ort vorgenommen werden. Beispielsweise dauert ein Händewaschen 5 bis 15 Sekunden mit einem Wasserverbrauch von 2 bis 10 Litern pro Minute, ein Duschen dauert 30 Sekunden bis 15 Minuten mit einem Wasserverbrauch von 8 bis 20 Litern pro Minute und das Einlassen eines Bades benötigt 10 bis 30 Minuten mit einem Wasserverbrauch von mehr als 20 Litern pro Minute.

In einer Ausführungsform umfasst das Verfahren die Schritte:
- Festlegen mindestens einer Trigger-Schwelle;
- Erfassen eines Zeit-Intervalls (I_{1,2,3}), während welcher die mindestens eine Trigger-Schwelle überschritten wird;
- Zuordnen eines spezifischen Verbrauchs (V1,2,3) zum erfassten Zeit-Intervall (I1,2,3).

Die Trigger-Schwelle kann als Temperaturwert oder als Temperaturdifferenz zur eingestellten Temperatur festgelegt werden. Die Trigger-Schwelle kann auch die eingestellte Temperatur sein. Es können mehrere unterschiedliche Trigger-Schwellen festgelegt werden.

In einer Ausführungsform umfasst das Verfahren den Schritt:
- Skalieren des Integrals der Wassertemperatur aufgrund des spezifischen Verbrauchs.

Bei einem Händewaschen, welches nur kurz dauert und welches bei welchem nur eine geringe Temperaturänderung feststellbar ist, kann die zweite Temperatur, für deren Aufrechterhaltung weniger Energie benötigt wird, beibehalten werden. Bei einem Duschen oder beim Einlassen eines Bades, kann dies durch den Temperaturverlauf erkannt werden und die erste Temperatur kann frühzeitig eingestellt werden.

In einer Ausführungsform umfasst das Verfahren die Schritte:
- Aufzeichnen eines Temperaturverlaufs aufgrund der erfassten Wassertemperaturen;
- Anpassen des Zeitfensters, des Schwellenwerts, der zweiten Temperatur, der Absenkdauer oder des Zeitraumes aufgrund der aufgezeichneten Temperaturverläufe.

So können beispielsweise Nutzungsgewohnheiten erkannt und zur Optimierung der Energieeinsparung genutzt werden. Die aufgezeichneten Temperaturverläufe können zur Erstellung einer Nutzungsstatistik verwendet werden. Die obengenannten Parameter können anhand der Nutzungsstatistik so angepasst werden, dass viel Energie gespart wird, ohne dass die Bequemlichkeit abnimmt, d.h. dass nicht lange auf warmes, bzw. kaltes Wasser gewartet werden muss. Wird erkannt, dass in einem gewissen Zeitraum die Nutzung eher hoch ist, dann können das Zeitfenster kurz, der Schwellenwert niedrig und die zweite Temperatur hoch gewählt werden. In einem Zeitraum mit geringer statistischer Nutzung kann das Zeitfenster lang, der Schwellenwert hoch und die zweite Temperatur niedrig gewählt werden.

In einer Ausführungsform ist das mindestens eine Ventil dem mindestens einen Verbraucher in der Fliessrichtung nachgeschaltet.

Somit ist sichergestellt, dass bei einem Warmwasser-System die beim letzten Verbraucher herrschende Wassertemperatur höhere ist, als die beim Ventil gemessene. Bei einem Kaltwasser-System ist sichergestellt, dass die beim letzten Verbraucher herrschende Wassertemperatur kleiner ist, als die beim Ventil gemessene.

In einer Ausführungsform umfasst das Wasser-Zirkulationssystem eine Warmwasser-Zirkulation mit mindestens einer Temperier-Einheit (4), welche dem Zirkulationssystem Wärme zuführen kann, beispielsweise einen Boiler. Alternativ oder zusätzlich umfasst das Wasser-Zirkulationssystem eine Kaltwasser-Zirkulation mit mindestens eine Temperier-Einheit (4), welche dem Zirkulationssystem Wärme entziehen kann, beispielsweise eine Kühlmaschine.

Die erwähnten Ausführungsformen des Verfahrens lassen sich in beliebiger Kombination einsetzen, sofern sie sich nicht widersprechen.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
Fig. 1 eine schematische Darstellung eines Wasser-Zirkulationssystems;
Fig. 2 eine schematische Grafik eines zusammenhängenden erfindungsgemässen Absenkzyklus;
Fig. 3 eine schematische Grafik eines zusammengesetzten erfindungsgemässen Absenkzyklus; und
Fig. 4 eine schematische Grafik eines Temperaturverlaufs in einem Strang des Systems der Figur 1.

### DETAILLIERTE BESCHREIBUNG DER ERFINDUNG

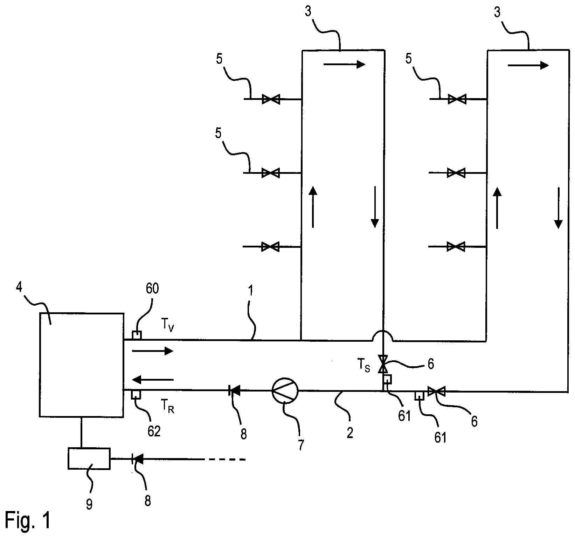

Die Figur 1 zeigt eine schematische Darstellung eines Wasser-Zirkulationssystems zur Ausführung des erfindungsgemässen Verfahrens. Das System umfasst eine Vorlauf-Leitung 1, eine Rücklauf-Leitung 2, zwei Stränge 3, welche die Vorlauf-Leitung 1 mit der Rücklauf-Leitung 2 verbinden. Weiter umfasst das System eine Temperier-Einheit 4, welche die Vorlauf-Leitung 1 mit der Rücklauf-Leitung 2 verbindet, wodurch Wasser in einer Fliessrichtung von der Vorlauf-Leitung 1, über die beiden Stränge 3, die Rücklauf-Leitung 2 und die Temperier-Einheit 4 zurück zur Vorlauf-Leitung 1 zirkulieren kann. Das System umfasst weiter mehrere Verbraucher 5, welcher entlang der Stränge 3 angeordnet sind und mit welchen Wasser dem Zirkulationssystem entnehmbar ist. In jedem Strang 3 ist ein Ventil 6 vorgesehen, welches im Bereich des Stranges 3 angeordnet ist, der in die Rücklauf-Leitung 2 mündet. D.h. das Ventil 6 ist im Bereich des Endes des Stranges 3 angeordnet. Mit jedem Ventil 6 kann die Durchflussrate des Wassers im jeweiligen Strang verändert werden. Durch die Veränderung der Durchflussrate kann die Temperatur verändert werden. Je grösser der Durchfluss ist, desto näher liegt die Temperatur des Wassers im Strang 3 bei der Temperatur der Temperier-Einheit. In der Vorlauf-Leitung 1, im Bereich der Temperier-Einheit 4 ist ein Temperatursensor 60 vorgesehen, mit welchem die Vorlauf-Temperatur Tv erfasst werden kann. Im Strang 3 im Bereich des Ventils 6 ist ein weiterer Temperatursensor 61 vorgesehen, mit welchem die Strang-Temperatur T_{S} erfassbar ist. In der Rücklauf-Leitung 2, im Bereich der Temperier-Einheit 4 ist ein weiterer Temperatursensor 62 vorgesehen, mit welchem die Rücklauf-Temperatur T_{R} erfassbar ist. Weiter umfasst das System eine strangspezifische oder eine gesamthafte Steuereinheit (nicht dargestellt), mit welcher die Daten der Temperatursensoren verarbeitbar sind und mit welcher das mindestens eine Ventil betätigbar ist. In der Rücklauf-Leitung 2 ist eine Zirkulations-Pumpe 7 vorgesehen, mit welcher Wasser von den Strängen 3 über die Rücklauf-Leitung 2 zur Temperier-Einheit 4 befördert werden kann. Zwischen der Pumpe 7 und de Temperier-Einheit 4 ist ein Rückschlagventil 8 vorgesehen, welches verhindert, dass Wasser von der Temperier-Einheit 4 zur Pumpe 7 zurückfliessen kann. Eine Zufuhr-Leitung führt vom öffentlichen Wasseranschluss zur Temperier-Einheit 4. In der Zufuhr-Leitung ist Filter 9 vorgesehen, welches das Leitungswasser aus dem öffentlichen Anschluss reinigen kann. Zwischen dem Filter 9 und dem öffentlichen Anschluss ist ein Rückschlagventil 8 vorgesehen, welches verhindert, dass Wasser von der Temperier-Einheit 4 zum öffentlichen Anschluss zurückfliessen kann.

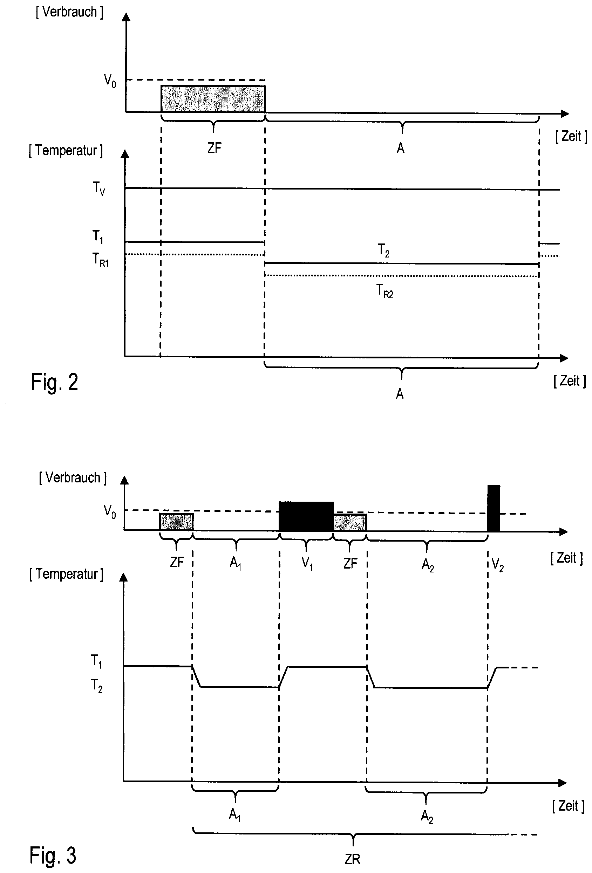

Die Figur 2 zeigt eine schematische Grafik eines zusammenhängenden erfindungsgemässen Absenkzyklus. Im einfachsten Fall des Verfahrens zum Betreiben eines Wasser-Zirkulationssystems ist im Normalbetrieb das Ventil 6 derart eingestellt, dass die erste Temperatur T₁ erreicht wird. Während der Absenkdauer A wird das Ventil 6 derart eingestellt, dass die zweite Temperatur T₂ erreicht wird. Die Temperaturdifferenz zwischen der ersten und der zweiten Temperatur kann 10°C betragen und die Absenkdauer 8 Stunden. Der Beginn der Absenkdauer kann um 22 Uhr sein und endet demnach um 6 Uhr am Folgetag. In einer Weiterführung des Verfahrens ist ein Zeitfenster ZF der Absenkdauer A vorgeschaltet. In diesem Zeitfenster ZF wird der Temperaturverlauf verwendet, um Rückschlüsse auf den Verbrauch zu schliessen. Alternativ kann ein Durchflussmesser verwendet werden, um den Verbrauch zu ermitteln. Unterschreitet die gemessene Temperatur im Zeitfenster ZF einen vorgegebenen Wert, so wird die Temperatur nicht abgesenkt. Erst, wenn die während dem Zeitfenster gemessene Temperatur nie unter dem vorgegebenen Wert liegt, wird die Temperatur abgesenkt. Alternativ kann die Differenz der ersten Temperatur und der gemessenen Strangtemperatur über das Zeitfenster integriert werden. Wenn das Integral einen Schwellenwert V₀ übersteigt, so wird die Temperatur nicht abgesenkt. Liegt der Wert darunter, wird die Temperatur während der Absenkdauer abgesenkt.

Die Figur 3 zeigt eine schematische Grafik eines zusammengesetzten erfindungsgemässen Absenkzyklus. Im Unterschied zum zusammenhängenden Absenkzyklus der Figur 2, wird die Temperaturabsenkung unterbrochen, sobald der Verbrauch zu hoch wird. Die Absenkdauer wird unterbrochen, wenn die im Strang gemessene Temperatur zu niedrig ist oder wenn die Temperaturdifferenz der ersten Temperatur und der Strangtemperatur, integriert über das Zeitfenster, den Schwellenwert erreicht oder übersteigt. In der dargestellten Grafik bleibt der Verbrauch während des Zeitfensters unter dem Schwellenwert V₀, worauf die Temperatur von der ersten Temperatur T₁ auf die zweite Temperatur T₂ abgesenkt wird. Nach einer ersten Absenkdauer A₁ überschreitet der Verbrauch den Schwellenwert V₀, worauf die Temperatur wieder auf die erste Temperatur erhöht wird. Sinkt der Verbrauch wieder unter den Schwellenwert, so wird wider während des Zeitfensters der Verbrauch ermittelt. Bleibt dieser unter dem Schwellenwert, wird am Ende des Zeitfensters die Temperatur wieder abgesenkt. Dieser Zyklus wird solange wiederholt, bis die Summe aller Absenkdauern der vorgegebenen Absenkdauer entspricht. Dieser Zyklus kann sich beliebig über den Tag verteilt wiederholen. Die Temperaturübergänge können berücksichtigt werden, indem die Temperaturdifferenz der ersten Temperatur zur gemessenen Temperatur über die Zeit integriert wird. Bei einer vorgegebenen Absenkung von 10°C während 8 Stunden ergäbe sich ein Gesamtintegral von 80°C·h. Demnach könnte die Absenkdauer ausgedehnt werden, wenn die Temperaturabsenkung kleiner ist. Theoretisch wären dies 16 Stunden bei 5°C. Alternativ können die Randbereiche vernachlässigt werden und es werden nur die Zeiten berücksichtigt, währen denen die zweite Temperatur gemessen wird. In einer weiteren Alternative wird die Zeit berücksichtigt, bei welcher die gemessene Temperatur in einem Warmwasser-System eine vorgegebene Temperatur unterschreitet, bzw. in einem Kaltwasser-System überschreitet. Eine solche Trigger- oder Auslöseschwelle kann so festgelegt werden, dass beispielsweise kleinere Temperaturschwankungen ignoriert werden und die Zeit der Temperaturabsenkung erst berücksichtigt wird, wenn die Trigger-Schwelle überschritten wird. Die Trigger-Schwelle kann 0,1°C, 0,2°C, 0,4°C, 0,5°C, 1°C, 1.5°C, 2°C, 2.5°C, 3°C oder mehr betragen. Die Trigger-Schwelle kann auch für die Erkennung eines spezifischen Verbrauchs verwendet werden. Dabei wird die Zeit gemessen, während welcher die Trigger-Schwelle überschritten wird. Ganz kurze Zeiten, d.h. Zeiten von unter 5 Sekunden, können ignoriert werden. Bei einer Zeit von 5 bis 15 Sekunden kann darauf geschlossen werden, dass beispielsweise sich jemand an einem Waschbecken die Hände wäscht. Bei einer Zeit von 30 Sekunden bis 15 Minuten lässt sich beispielsweise ein Duschen erkennen und bei einer Zeit von 10 bis 30 Minuten kann das Einlassen eines Bades erkannt werden.

In einer Weiterführung kann zusätzlich ein Zeitraum festgelegt werden, in welchem die Absenkung überhaupt zulässig ist. So kann die Absenkung beispielsweise nur von 22 Uhr bis 6 Uhr des Folgetages zulässig sein. Die Wassertemperatur aller Stränge ist dann ausserhalb des Zeitraumes immer auf der ersten Temperatur eingestellt und kann, wenn dies wie oben beschrieben zulässig ist, auf die zweite Temperatur abgesenkt werden.

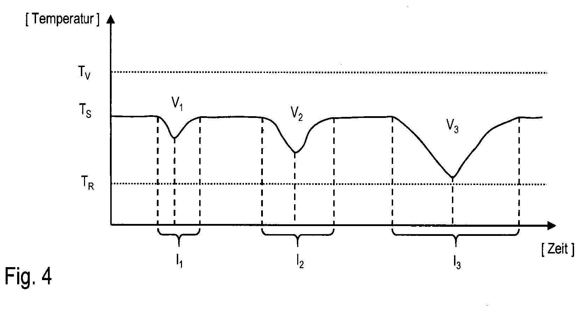

Die Figur 4 zeigt eine schematische Darstellung eines Temperaturverlaufs in einem Strang des Systems während spezifischen Verbräuchen V₁,V₂,V₃. Wenn sich die Strangtemperatur T_{S} während einem kurzen Intervall I₁ nur gering ändert, dann kann dies einem Händewaschen V₁ zugeordnet werden. Eine grössere Temperaturänderung über ein längeres Intervall I₂, kann einem Duschen V₂ zugeordnet werden und eine grosse Änderung der Strangtemperatur über ein langes Intervall I₃; kann dem Einlassen eines Bades V₃ zugeordnet werden. Die Aufzeichnung des Temperaturverlaufs kann derart konzipiert sein, dass sie erst stattfindet, wenn die gemessene Temperatur im Strang die Trigger-Schwelle überschreitet, d.h. die Abweichung zur eingestellten Temperatur einen gewissen Wert überschreitet. Alternativ, kann wie oben beschrieben die Zeit gemessen werden, während welcher die Trigger-Schwelle überschritten wird, um einen spezifischen Verbrauch V₁,V₂,V₃ zu ermitteln. Das Zeitintervall, während dem die Trigger-Schwelle überschritten wird, kann demnach für die Erkennung des spezifischen Verbrauchs verwendet werden. Ein ganz kurzes Intervall kann ignoriert werden. Ein kurzes Intervall deutet auf ein Händewaschen, ein längeres auf ein Duschen und ein langes auf ein Einlassen eines Bades. Es können auch mehrere Trigger-Schwellen festgelegt werden, um die Ermittlung nicht alleine auf die Zeit, d.h. auf die Länge der Intervalle abzustützen. So kann festgestellt werden, währen welcher Zeit, welche Trigger-Schwelle überschritten wird. Wird nur die erste Trigger-Schwelle überschritten, deutet dies auf ein Händewaschen. Wird die erste Trigger-Schwelle währen einem ersten Intervall überschritten und eine zweite Trigger-Schwelle währen einem zweiten Intervall, wobei die erste Trigger-Schwelle kleiner ist als die zweite und wobei das erste Intervall länger ist als das zweite, so deutet dies auf ein Duschen hin. So können beliebig viele Trigger-Schwellen und Intervalle miteinander kombiniert und für eine Auswertung miteinander verglichen werden. Als Trigger-Schwelle kann auch die voreingestellte Strangtemperatur verwendet werden.

### BEZUGSZEICHENLISTE

| | | | |
|---|---|---|---|
| 1 | Vorlauf-Leitung | T_{V} | Vorlauf-Temperatur |
| 2 | Rücklauf-Leitung | T_{S} | Strang-Temperatur |
| 3 | Strang | T_{1,2,3} | Temperatur |
| 4 | Temperier-Einheit | ΔT | Temperaturdifferenz |
| 5 | Verbraucher | T_{R} | Rücklauf-Temperatur |
| 6 | Ventil | D_{1,2} | Durchfluss |
| 60 | Temperatursensor | ZR | Zeitraum |
| 61 | Temperatursensor | ZF | Zeitfenster |
| 62 | Temperatursensor | V_{1,2,3} | Verbrauch |
| 7 | Pumpe | V₀ | Schwellenwert |
| 8 | Rückflusssperre | A | Absenkdauer |
| 9 | Filter | A_{1,2} | Absenkdauer-Fragment |
| I_{1,2,3} | Intervall | | |

## Patentansprüche

1. Ein Verfahren zum Betreiben eines Wasser-Zirkulationssystems umfassend die Schritte:
- Bereitstellen des Wasser-Zirkulationssystems, umfassend:
- mindestens eine Vorlauf-Leitung (1),
- mindestens eine Rücklauf-Leitung (2),
- mindestens einen Strang (3), welcher die Vorlauf-Leitung (1) mit der Rücklauf-Leitung (2) verbindet,
- mindestens eine Temperier-Einheit (4), welche die Vorlauf-Leitung (1) mit der Rücklauf-Leitung (2) verbindet,
wodurch Wasser in einer Fliessrichtung von der mindestens einen Vorlauf-Leitung (1), über den mindestens einen Strang (3) und die mindestens eine Rücklauf-Leitung (2) zurück zur Vorlauf-Leitung (1) zirkulieren kann,
- mindestens einen Verbraucher (5), welcher entlang des mindestens einen Stranges (3) angeordnet ist und mit welchem Wasser dem Zirkulationssystem entnehmbar ist,
- mindestens ein Ventil (6), mit welchem der Durchfluss des Wassers im Zirkulationssystem veränderbar ist,
- mindestens einen Temperatursensor (60,61,62), mit welchem die Wassertemperatur in einem Leitungsabschnitt erfassbar ist,
- mindestens eine Systemsteuerung, mit welcher die Daten des mindestens einen Temperatursensors (60,61,62) verarbeitbar sind und mit welcher das mindestens eine Ventil (6) betätigbar ist;
- Festlegen einer ersten Temperatur (T₁);
- Festlegen einer zweiten Temperatur (T₂);
- Festlegen einer Absenkdauer (A);
- Erfassen der Wassertemperatur mit dem mindestens einen Temperaursensor (60,61,62);
- Einstellen der ersten Temperatur (T₁) im Leitungsabschnitt durch das Einstellen eines ersten Durchflusses (D₁) mit dem mindestens einen Ventil (6);
- Einstellen der zweiten Temperatur (T₂) im Leitungsabschnitt durch das Einstellen eines zweiten Durchflusses (D₂) mit dem mindestens einen Ventil (6) während der Absenkdauer (A);- Festlegen eines Zeitfensters (ZF);
- Festlegen einer minimalen Temperaturdifferenz;
- Berechnen des absoluten Werts der Differenz zwischen der erfassten Wassertemperatur und der ersten Temperatur (T₁);
- Einstellen der zweiten Temperatur (T₂),
wenn der absolute Wert der Differenz kleiner oder gleich der minimalen Temperaturdifferenz ist;
- Erfassen der Zeit, während welcher die zweite Temperatur (T₂) eingestellt ist;
- Einstellen der ersten Temperatur (T₁),
wenn der absolute Wert der Differenz grösser als die minimale Temperaturdifferenz ist oder
wenn die Gesamtzeit, während welcher die zweite Temperatur (T₂) eingestellt ist, grösser als die Absenkdauer (A) ist.

2. Das Verfahren gemäss Anspruch 1, umfassend die Schritte:
- Festlegen eines Schwellenwertes (V₀);
- Berechnen des absoluten Werts der Differenz zwischen der erfassten Wassertemperatur und der ersten Temperatur (T₁) ;
- Integrieren der Differenz während dem Zeitfenster (ZF) ;
- Einstellen der zweiten Temperatur (T₂),
wenn das Integral kleiner oder gleich dem Schwellenwert (V₀) ist;
- Erfassen der Zeit, während welcher die zweite Temperatur (T₂) eingestellt ist;
- Einstellen der ersten Temperatur (T₁),
wenn das Integral grösser als der Schwellenwert (V₀) ist oder
wenn die Gesamtzeit, während welcher die zweite Temperatur (T₂) eingestellt ist, grösser als die Absenkdauer (A) ist.

3. Das Verfahren gemäss Anspruch 1 oder 2, umfassend den Schritt:
- Festlegen eines Zeitraumes (ZR),
wobei die zweite Temperatur (T₂) nur dann eingestellt wird, wenn die aktuelle Zeit innerhalb des Zeitraumes (ZR) liegt.

4. Das Verfahren gemäss Anspruch 3, wobei das Zeitfenster (ZF) in den Randbereichen des Zeitraumes (ZR) grösser ist als in seinem Mittelbereich.

5. Das Verfahren gemäss Anspruch 3 oder 4, wobei mehrere Zeiträume (ZR) über einen Tag verteilt vorgesehen sind, wobei die zweite Temperatur (T₂) in allen Zeiträumen (ZR) gleich, teilweise unterschiedlich oder unterschiedlich ist.

6. Das Verfahren gemäss einem der Ansprüche 1 bis 5, umfassend die Schritte:
- Aufzeichnen eines Temperaturverlaufs der erfassten Wassertemperaturen;
- Zuordnen eines spezifischen Verbrauchs (V_{1,2,3}) zum aufgezeichneten Temperaturverlauf während einem Zeit-Intervall (I_{1,2,3}).

7. Das Verfahren gemäss einem der Ansprüche 1 bis 5, umfassend die Schritte:
- Festlegen mindestens einer Trigger-Temperaturschwelle;
- Erfassen eines Zeit-Intervalls (I_{1,2,3}), während welcher die mindestens eine Trigger-Temperaturschwelle überschritten wird;
- Zuordnen eines spezifischen Verbrauchs (V_{1,2,3}) zum erfassten Zeit-Intervall (I_{1,2,3}).

8. Das Verfahren gemäss einem der Ansprüche 1 bis 5, umfassend die Schritte:
- Aufzeichnen eines Temperaturverlaufs der erfassten Wassertemperaturen;
- Anpassen des Zeitfensters (ZF), des Schwellenwerts (V₀), der zweiten Temperatur (T₂), der Absenkdauer (A) oder des Zeitraumes (ZR) aufgrund der aufgezeichneten Temperaturverläufe.

9. Das Verfahren gemäss einem der vorangehenden Ansprüche, wobei das mindestens eine Ventil (6) dem mindestens einen Verbraucher (5) in der Fliessrichtung nachgeschaltet ist.

10. Das Verfahren gemäss einem der vorangehenden Ansprüche, wobei das Wasser-Zirkulationssystem eine Warmwasser-Zirkulation mit mindestens einer Temperier-Einheit (4) umfasst, welche dem Zirkulationssystem Wärme zuführen kann und/oder
wobei das Wasser-Zirkulationssystem eine Kaltwasser-Zirkulation mit mindestens einer Temperier-Einheit (4) umfasst, welche dem Zirkulationssystem Wärme entziehen kann.

## Claims

1. A method for operating a water circulation system comprising the steps of:
- Providing the water circulation system, comprising:
- at least one feed line (1),
- at least one return line (2),
- at least one strand (3) which connects the feed line (1) to the return line (2),
- at least one temperature control unit (4), which connects the feed line (1) to the return line (2),
whereby water can circulate in a flow direction from the at least one feed line (1), via the at least one strand (3) and the at least one return line (2) back to the feed line (1),
- at least one consumer (5), which is arranged along the at least one strand (3) and with which water can be removed from the circulation system,
- at least one valve (6) with which the flow rate of the water in the circulation system can be changed,
- at least one temperature sensor (60,61,62), with which the water temperature in a line section can be detected,
- at least one system controller with which the data of the at least one temperature sensor (60,61,62) can be processed and with which the at least one valve (6) can be actuated;
- Determining a first temperature (T₁);
- Determining a second temperature (T₂);
- Determining a lowering time (A);
- Detecting the water temperature with the at least one temperature sensor (60,61,62);
- Setting the first temperature (T₁) in the pipe section by setting a first flow rate (D₁) with the at least one valve (6);
- Setting the second temperature (T₂) in the line section by setting a second flow rate (D₂) with the at least one valve (6) during the lowering time (A);
- Setting a time window (ZF);
- Setting a minimum temperature difference;
- Calculating the absolute value of the difference between the detected water temperature and the first temperature (T₁);
- Setting the second temperature (T₂),
if the absolute value of the difference is less than or equal to the minimum temperature difference;
- Detecting the time during which the second temperature (T2) is set;
- Setting the first temperature (T₁),
if the absolute value of the difference is greater than the minimum temperature difference or
if the total time during which the second temperature (T₂) is set is greater than the lowering time (A).

2. The method according to claim 1, comprising the steps of:
- Setting a threshold value (V₀);
- Calculating the absolute value of the difference between the detected water temperature and the first temperature (T₁);
- Integrating the difference during the time window (ZF) ;
- Set the second temperature (T₂),
if the integral is less than or equal to the threshold value (V₀);
- Detecting the time during which the second temperature (T₂) is set;
- Setting the first temperature (T₁),
if the integral is greater than the threshold value (V₀) or
if the total time during which the second temperature (T₂) is set is greater than the lowering time (A).

3. The method according to claim 1 or 2, comprising the step of:
- Setting a time period (ZR),
wherein the second temperature (T₂) is only set if the current time is within the time period (ZR).

4. The method according to claim 3, wherein the time window (ZF) is larger in the edge regions of the time period (ZR) than in its center region.

5. The method according to claim 3 or 4, wherein a plurality of time periods (ZR) are provided distributed over a day, wherein the second temperature (T₂) is the same, partially different, or different in all time periods (ZR).

6. The method according to any one of claims 1 to 5, comprising the steps of:
- Recording a temperature curve of the detected water temperatures;
- Assigning a specific consumption (V_{1,2,3}) to the recorded temperature curve during a time interval (I_{1,2,3}).

7. The method according to any one of claims 1 to 5, comprising the steps of:
- Determining at least one trigger temperature threshold;
- detecting a time interval (I_{1,2,3}) during which the at least one trigger temperature threshold is exceeded;
- assigning a specific consumption (V_{1,2,3}) to the detected time interval (I_{1,2,3}).

8. The method according to any one of claims 1 to 5, comprising the steps of:
- Recording a temperature curve of the detected water temperatures;
- Adjusting the time window (ZF), the threshold value (V₀), the second temperature (T₂), the lowering time (A) or the time period (ZR) based on the recorded temperature curves.

9. The method according to one of the preceding claims, wherein the at least one valve (6) is connected downstream of the at least one consumer (5) in the flow direction.

10. The method according to any one of the preceding claims, wherein the water circulation system comprises a hot-water circulation with at least one temperature control unit (4) which can supply heat to the circulation system and/or
wherein the water circulation system comprises a coldwater circulation with at least one temperature control unit (4) which can extract heat from the circulation system.

## Revendications

1. Un procédé de fonctionnement d'un système de circulation d'eau comprenant les étapes de:
- Fournir le système de circulation d'eau, comprenant:
- au moins une conduite d'alimentation (1),
- au moins une conduite de retour (2),
- au moins une conduite (3) qui relie la conduite d'alimentation (1) à la conduite de retour (2),
- au moins une unité de régulation de température (4) qui relie la conduite d'alimentation (1) à la conduite de retour (2),
ce qui permet à l'eau de circuler dans une direction d'écoulement depuis la au moins une conduite d'alimentation (1), via la au moins une conduite (3) et la au moins une conduite de retour (2), en retour vers la conduite d'alimentation (1),
- au moins un consommateur (5), qui est disposé le long de l'au moins une conduite (3) et avec lequel de l'eau peut être prélevée du système de circulation,
- au moins une vanne (6) permettant de modifier le débit de l'eau dans le système de circulation,
- au moins un capteur de température (60,61,62), avec lequel la température de l'eau peut être détectée dans une section de conduite,
- au moins une commande de système avec laquelle les données de l'au moins un capteur de température (60,61,62) peuvent être traitées et avec laquelle l'au moins une vanne (6) peut être actionnée;
- Définir une première température (T₁);
- Définir une deuxième température (T₂);
- Définir une durée d'abaissement (A);
- Détecter la température de l'eau avec le au moins un capteur de température (60,61,62);
- Régler la première température (T₁) dans la section de conduite en réglant un premier débit (D₁) avec l'au moins une vanne (6);
- Régler la deuxième température (T₂) dans la section de conduite en réglant un deuxième débit (D₂) avec la au moins une vanne (6) pendant la durée d'abaissement (A) ;
- Définir une fenêtre de temps (ZF);
- Définir une différence de température minimale ;
- Calculer la valeur absolue de la différence entre la température de l'eau détectée et la première température (T₁);
- Régler la deuxième température (T₂),
si la valeur absolue de la différence est inférieure ou égale à la différence de température minimale;
- Détecter le temps pendant lequel la deuxième température (T₂) est réglée;
- Régler la première température (T₁),
si la valeur absolue de la différence est supérieure à la différence de température minimale ou
si le temps total pendant lequel la deuxième température (T₂) est réglée est supérieur à la durée de l'abaissement (A).

2. Le procédé selon la revendication 1, comprenant les étapes de:
- Définir une valeur seuil (V₀);
- Calculer la valeur absolue de la différence entre la température de l'eau détectée et la première température (T₁);
- Intégrer la différence pendant la fenêtre de temps (ZF) ;
- Régler la deuxième température (T₂),
si l'intégrale est inférieure ou égale à la valeur seuil (V₀) ;
- Détecter le temps pendant lequel la deuxième température (T₂) est réglée;
- Régler la première température (T₁),
si l'intégrale est supérieure à la valeur de seuil (V₀) ou
si le temps total pendant lequel la deuxième température (T₂) est réglée est supérieur à la durée de l'abaissement (A).

3. Le procédé selon la revendication 1 ou 2, comprenant l'étape de:
- Définir une période (ZR),
dans lequel la deuxième température (T₂) n'est réglée que si l'heure actuelle se situe à l'intérieur de la période (ZR).

4. Le procédé selon la revendication 3, dans lequel la fenêtre de temps (ZF) est plus grande dans les zones périphériques de la période (ZR) que dans sa zone centrale.

5. Le procédé selon la revendication 3 ou 4, dans lequel plusieurs périodes (ZR) sont prévues, réparties sur une journée, la deuxième température (T₂) étant identique, partiellement différente ou différente dans toutes les périodes (ZR).

6. Le procédé selon l'une des revendications 1 à 5, comprenant les étapes de:
- Enregistrer une courbe de température des températures d'eau détectées;
- Associer une consommation spécifique (V_{1,2,3}) à la courbe de température enregistrée pendant un intervalle de temps (I_{1,2,3}).

7. Le procédé selon l'une des revendications 1 à 5, comprenant les étapes de:
- Définir au moins un seuil de température de déclenchement;
- Détecter un intervalle de temps (I_{1,2,3}) pendant lequel ledit au moins un seuil de température de déclenchement est dépassé;
- Associer une consommation spécifique (V_{1,2,3}) à l'intervalle de temps détecté (I_{1,2,3}).

8. Le procédé selon l'une des revendications 1 à 5, comprenant les étapes de:
- Enregistrer une courbe de température des températures de l'eau détectées;
- Ajuster la fenêtre de temps (ZF), de la valeur seuil (V₀), de la deuxième température (T₂), de la durée d'abaissement (A) ou de la période (ZR) sur la base des courbes de température enregistrées.

9. Le procédé selon l'une des revendications précédentes, dans lequel l'au moins une vanne (6) est montée en aval de l'au moins un consommateur (5) dans la direction d'écoulement.

10. Procédé selon l'une quelconque des revendications précédentes, dans lequel le système de circulation d'eau comprend une circulation d'eau chaude avec au moins une unité de régulation de température (4) qui peut fournir de la chaleur au système de circulation et/ou
dans lequel le système de circulation d'eau comprend une circulation d'eau froide avec au moins une unité de régulation de température (4) qui peut extraire de la chaleur du système de circulation.
